# DEMANDE DE BREVET EUROPEEN

(11) **EP 0 661 482 A1**
(43) Date de publication de la demande: **05.07.1995**
(21) Numéro de dépôt: 94440074.6
(22) Date de dépôt: 22.11.1994
(51) Int. Cl.: F16K 1/22, F16K 47/02

(54) **Vanne de régulation du type à papillon**

(30) Priorité: 24.11.1993 FR 9314219
(71) Demandeur: ROTATROL AG, CH-6330 Cham (CH)
(72) Inventeur: Bey, Roger, F-68110 Illzach (FR)
(74) Mandataire: Nithardt, Roland

(57) **Abrégé**

Cette vanne (30) comporte un corps (31) définissant un logement (32) pour un obturateur mobile (13), rotatif autour d'un axe (14). Le logement (32) est prolongé par un canal d'entrée (15) et un canal de sortie (16), définissant ainsi un passage de communication (17) entre le canal d'entrée et le canal de sortie. La section efficace de ce passage, et par conséquent, le débit du fluide traversant la vanne, sont régulés par la position angulaire de l'obturateur (13). Cette vanne comporte en outre, un élément générateur d'une perte de charge (18) muni de passages calibrés (19) de faible diamètre, disposé entre le canal d'entrée (15) et une partie du logement, dans une zone périphérique dudit logement (32).

## Description

La présente invention concerne une vanne de régulation du type à papillon, comportant un corps dans lequel est ménagé un logement contenant un obturateur mobile appelé papillon, cet obturateur étant rotatif autour d'un axe, ledit logement étant prolongé de part et d'autre par un canal d'entrée et par un canal de sortie respectivement agencés pour être connectés à un conduit d'entrée et à un conduit de sortie, ledit canal d'entrée, ledit logement et ledit canal de sortie définissant un passage de communication reliant le conduit d'entrée au conduit de sortie, la section efficace de ce passage et par conséquent le débit du fluide traversant la vanne étant régulés en fonction de la position angulaire de l'obturateur dans le logement.

Les vannes du type à papillon actuellement utilisées pour effectuer la régulation d'un fluide, comportent un corps dans lequel est ménagé un logement contenant un obturateur rotatif autour d'un axe central. Ce logement est prolongé d'une part par un canal d' entrée, d'autre part par un canal de sortie, respectivement agencés pour être connectés à un conduit d'entrée et à un conduit de sortie (non représentés). Lorsque l'on fait pivoter l'obturateur autour de son axe de rotation, on augmente ou on diminue la dimension du passage reliant le canal d'entrée au canal de sortie à travers le logement de la vanne. Ainsi, en faisant pivoter cet obturateur, on peut régler le débit d'un fluide traversant la vanne.

Ce type de vanne présente malheureusement un certain nombre d'inconvénients. En début d'ouverture, la faible dimension du passage entre le canal d'entrée et le canal de sortie génère une vitesse élevée du fluide traversant la vanne. La position de l'obturateur mobile est alors instable, ce qui rend difficile, une bonne régulation.

En outre, la charge statique sur l'obturateur mobile n'est pas symétrique par rapport à son axe de rotation. Il en résulte un couple qui tend à le faire pivoter autour de son axe ce qui rend la régulation erratique.

Enfin, le couple dynamique sur l'obturateur mobile dépend de l'angle d'ouverture et de la pression différentielle, ce qui entraîne également une régulation instable.

Une solution à certains de ces problèmes a été apportée par une vanne papillon qui comporte une chicane de contre-pression placée dans son logement, à proximité du canal de sortie. Cette chicane réduit le couple dynamique, ce qui facilite le pivotement de l'obturateur et son maintien en position.

Cette vanne présente toutefois encore quelques inconvénients. La chicane de contre-pression est uniquement efficace pour un débit donné et ne permet pas de résoudre les problèmes mentionnés ci-dessus et se posant au début de l'ouverture de la vanne. Elle ne permet donc pas non plus d'assurer un réglage stable du débit à faible ouverture.

D'autres solutions, telles qu' illustrées dans les publizations française FR-A-2 616 874 et européenne EP-A-0 188 130, ont été réalisées en prévoyant un élément générateur de pertes de charge disposé dans la zone d'ouverture et dans la zone de fermeture de la vanne. Dans la première publication, cet élément se présente sous la forme d'un secteur circulaire perforé ayant pour centre celui de l'axe de l'obturateur. Dans la seconde publication, l'élément générateur de pertes de charge est constitué d'une ou de plusieurs plaques perforées disposées parallèlement entre elles. Dans ces deux réalisations, à faible ouverture de l'obturateur, le flux du fluide s'écoule des deux côtés opposés de l'obturateur, ce qui empêche une régulation précise à très faible débit.

La présente invention se propose de pallier ces inconvénients en réalisant une vanne papillon permettant d'assurer un réglage précis à faible débit, offrant une charge sensiblement symétrique par rapport à l'axe de rotation de l'obturateur et présentant une perte de charge importante à l'entrée de la vanne de façon à ne pas engendrer des phénomènes de cavitation et de bruit.

Ce but est atteint par une vanne telle que définie en préambule, et caractérisée en ce qu'elle comporte au moins un élément générateur d'une perte de charge localisé dans au moins une zone périphérique du canal d' entrée, cet élément comportant au moins un passage calibré reliant le conduit d'entrée audit logement et en ce que ledit logement comporte une zone de fermeture intermédiaire diamétralement opposée à l'élément générateur d'une perte de charge et agencée pour coopérer avec ledit obturateur mobile afin d'assurer la fermeture de cette partie de la vanne pour que le fluide traversant la vanne ne puisse pénétrer dans le logement que par le seul élément générateur d'une perte de charge.

Selon un premier mode de réalisation, l'élément générateur d'une perte de charge comporte plusieurs passages calibrés reliant le conduit d'entrée au logement contenant l'obturateur mobile.

Selon un deuxième mode de réalisation, l'élément générateur d'une perte de charge comporte plusieurs rainures longitudinales reliant le conduit d'entrée au logement contenant l'obturateur mobile.

Selon un troisième mode de réalisation, l'élément générateur d'une perte de charge comporte plusieurs fentes ondulées reliant le conduit d'entrée au logement contenant l'obturateur mobile.

La présente invention et ses avantages apparaîtront mieux dans la description d'exemples de réalisation non limitatifs et en référence aux dessins annexés dans lesquels:
- la figure 1 est une vue en coupe d'une première forme de réalisation d'une vanne selon l'invention, en position fermée;
- la figure 2 est une vue en coupe de la vanne de la figure 1 en position de régulation;
- la figure 3 est une vue en coupe de la vanne de la figure 1 en position ouverte;
- la figure 4 est une vue en coupe d'une deuxième forme de réalisation d'une vanne selon l'invention dans une première position de régulation correspondant à une faible ouverture de l'obturateur mobile;
- la figure 5 est une vue en coupe de la vanne de la figure 4 dans une deuxième position de régulation correspondant à une ouverture plus grande de l'obturateur mobile;
- la figure 6 est une vue en coupe d'une troisième forme de réalisation de la vanne selon l'invention, en position de régulation;
- la figure 7 est une vue en coupe d'une quatrième forme de réalisation de la vanne selon l'invention en position de régulation; et
- les figures 8 à 10 représentent diverses formes de réalisation des éléments générateurs d'une perte de charge.

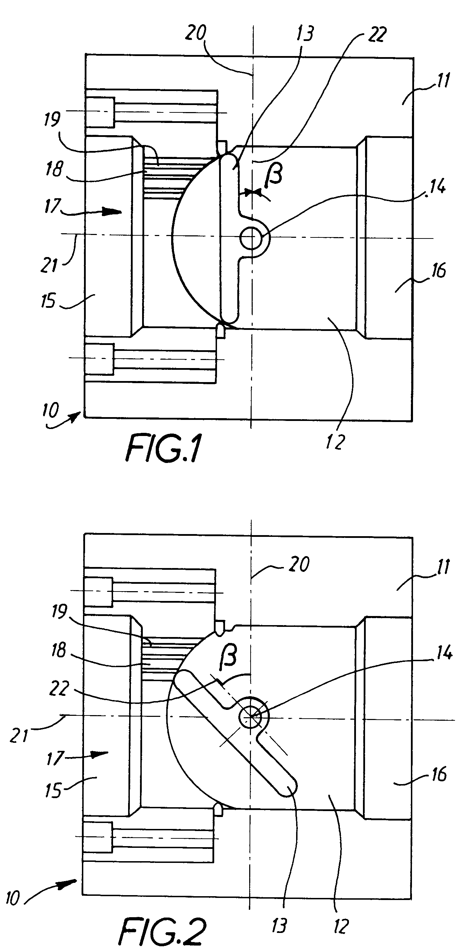

En référence aux figures 1 à 3, la vanne 10 comporte un corps 11 définissant un logement 12 dans lequel est disposé un obturateur mobile 13 pivotant autour d'un axe de rotation 14. Ce logement 12 est prolongé d'une part par un canal d'entrée 15, d'autre part par un canal de sortie 16, respectivement agencés pour être connectés à un conduit d'entrée et à un conduit de sortie (non représentés). Le logement définit un passage de communication 17 entre le canal d'entrée et le canal de sortie. La dimension de ce passage peut être réglée entre une valeur nulle et une valeur maximale en faisant pivoter l'obturateur mobile 13. Ainsi, le débit d'un fluide traversant la vanne 10 peut être réglé en fonction de la position angulaire de l'obturateur.

La vanne est équipée d'un élément générateur d'une perte de charge 18 placé entre le canal d'entrée 15 et le logement 12. Cet élément comporte plusieurs passages calibrés 19 cylindriques, disposés sensiblement parallèlement au canal d'entrée. Le diamètre de ces passages calibrés 19 est sensiblement inférieur au diamètre du canal d'entrée 15 et l'élément générateur d'une perte de charge 18 est placé dans la zone du logement 12 qui est traversée en priorité par le fluide lorsque l'on commence à ouvrir la vanne.

Dans le mode de réalisation illustré par les figures 1 à 3, l'obturateur 13 a la forme d'un disque. Le logement 12 a la forme d'une demi-sphère dans la zone la plus proche du canal d'entrée 15, et la forme d'un cylindre de même diamètre que la demi-sphère dans la zone la plus proche du canal de sortie 16. L'obturateur 13 est positionné et dimensionné de façon à ce qu'il puisse fermer de manière étanche, le passage de communication 17 de la vanne.

La figure 1 illustre la vanne 10 avec l'obturateur 13 en position fermée. Dans cette position, l'obturateur bouche entièrement le passage de communication 17 entre le canal d'entrée 15 et le canal de sortie 16. Si l'on définit l'angle d'ouverture β comme étant l'angle formé entre un axe 20 perpendiculaire à l'axe 21 du canal d'entrée et de sortie et passant par l'axe de rotation 14 de l'obturateur et un axe 22 perpendiculaire à l'axe de rotation 14 de l'obturateur et parallèle au plan de l'obturateur 13, l'angle d'ouverture β est nul dans la position représentée par cette figure.

La figure 2 illustre la vanne 10 avec l'obturateur 13 en position de régulation. Dans cette position, le fluide traversant la vanne passe partiellement par les passages calibrés 19 de l'élément générateur d'une perte de charge 18 et partiellement par la zone du logement 12 située à l'opposé de l'élément générateur d'une perte de charge. L'angle d'ouverture β est compris entre 0 et 90°. La modification de cet angle d'ouverture permet de régler le débit de la vanne.

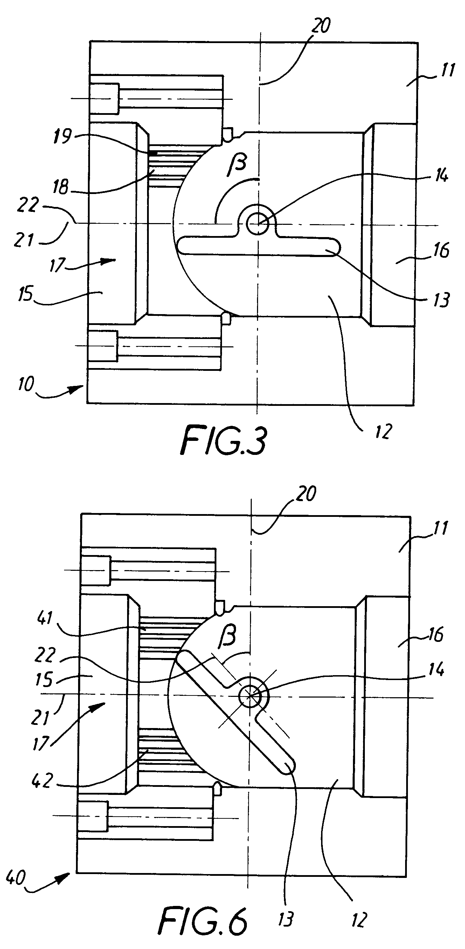

La figure 3 illustre la vanne 10 avec l'obturateur 13 en position ouverte. Dans cette position, l'obturateur offre le passage le plus grand possible entre le canal d'entrée et le canal de sortie. L'angle d'ouverture β est égal à 90°.

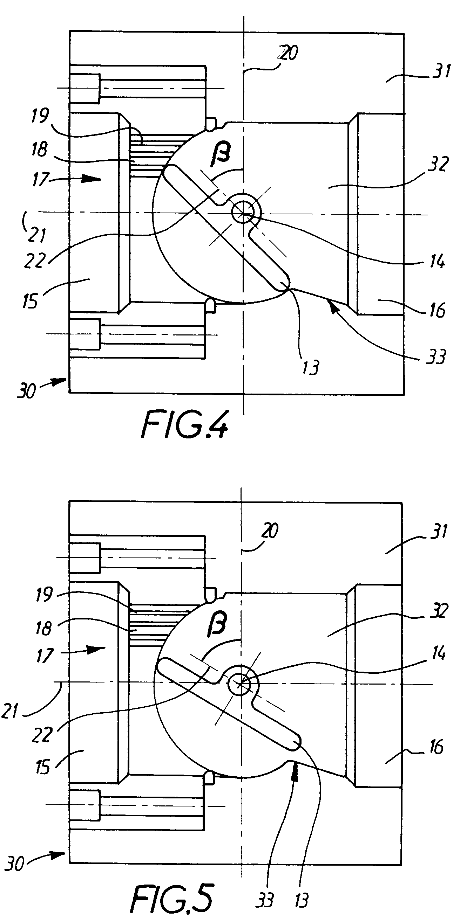

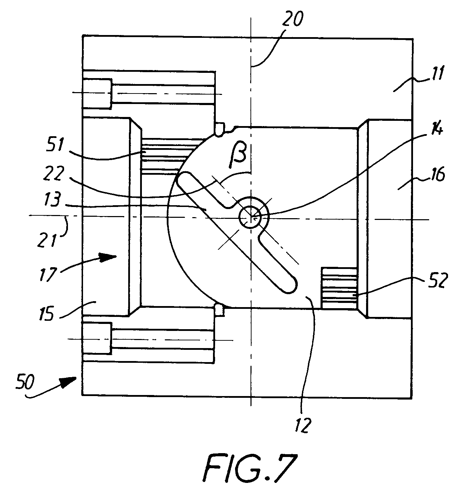

Les figures 4 et 5 illustrent une autre forme de réalisation d'une vanne 30 selon l'invention. Les éléments communs à la réalisation illustrée par les figures 1 à 3 d'une part, et 4 et 5 d'autre part, portent les mêmes numéros de référence. Les éléments de cette vanne qui diffèrent par rapport à la vanne 10 illustrée par les figures 1 à 3, sont le corps 31 et le logement 32. Dans cette forme de réalisation, la partie du logement 32 en forme de demi-sphère, est prolongée dans sa partie située à l'opposé de l'élément générateur d'une perte de charge 18, par une zone de fermeture intermédiaire 33 ayant la forme d'une portion de sphère de même diamètre reliée au canal de sortie par une zone tronconique.

La figure 4 illustre la vanne 30 dans une première position de régulation. Dans cette position, le fluide ne peut pénétrer dans le logement 32 et traverser la vanne que par l'élément générateur d'une perte de charge 18. La zone de fermeture intermédiaire 33 située à l'arrière du logement 32 empêche le passage de fluide.

La figure 5 illustre la vanne 30 dans une deuxième position de régulation. L'angle d'ouverture β est plus grand que dans la figure précédente et le fluide peut traverser la vanne de part et d'autre de l'obturateur 13.

Ce mode de réalisation présente l'avantage de permettre une régulation particulièrement fine à faible débit grâce au fait qu' à faible ouverture, le fluide ne peut traverser la vanne qu'en passant par les passages calibrés 19 de l'élément générateur d'une perte de charge 18. Dans la phase suivante, la zone de fermeture intermédiaire génère une deuxième perte de charge due à l'étranglement entre cette zone et le bord correspondant de l'obturateur mobile.

La figure 6 illustre une variante de la vanne des figures 1 à 3. Comme précédemment, les éléments communs aux formes de réalisation des figures 1 à 3 et de la figure 6, portent les mêmes numéros de référence. Dans cette vanne 40, l'élément générateur d'une perte de charge 41 est constitué d'un anneau pourvu de plusieurs passages calibrés 42 de faible diamètre, disposés de manière à assurer une communication entre le canal d'entrée 15 et le canal de sortie 16.

La figure 7 illustre une forme de réalisation d'une vanne 50 comportant deux éléments générateurs d'une perte de charge 51, 52. Le premier de ces éléments 51 est placé entre le canal d'entrée 15 et le logement 12 et correspond à l'élément 18 des figures 1 à 3. Le deuxième élément 52 est placé entre le logement 12 et le canal de sortie 16. Cette forme de réalisation génère une contre-pression sur l'obturateur 13 et équilibre la charge dynamique sur cet obturateur. Cette vanne 50 peut, de plus, être avantageusement utilisée dans un dispositif dans lequel le fluide peut circuler dans les deux sens à travers la vanne.

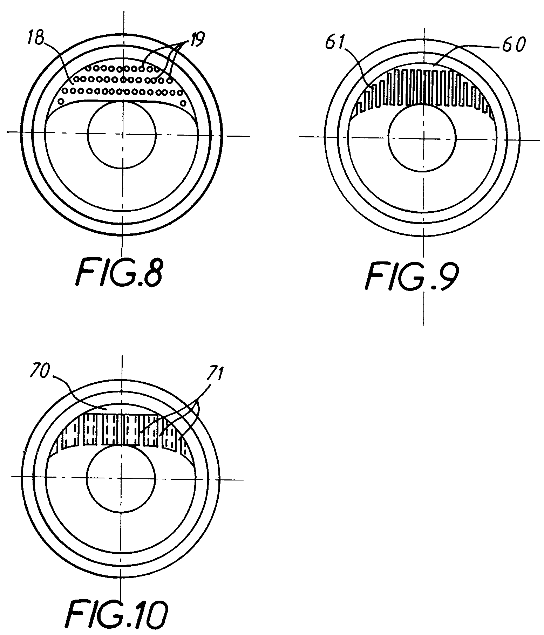

Les figures 8 à 10 illustrent différentes variantes de réalisation de l'élément générateur d'une perte de charge tels qu'ils peuvent être utilisés dans une vanne telle que décrite ci-dessus.

L'élément générateur d'une perte de charge 18 illustré par la figure 8 comporte plusieurs passages calibrés 19 de faible diamètre reliant le canal d'entrée au logement de la vanne. Cette forme de réalisation est identique à celle illustrée par les figures 1 à 3.

L'élément générateur d'une perte de charge 60 représenté à la figure 9 comporte une série de fentes longitudinales 61 permettant le passage du fluide à travers la vanne.

La figure 10 représente un élément générateur d'une perte de charge 70 pourvu de plusieurs rainures ondulées 71 reliant le canal d'entrée au logement de la vanne.

La forme, la dimension et la position des ouvertures de l'élément générateur d'une perte de charge assurent une forte perte de charge en début d'ouverture. Cette perte de charge permet de supprimer les phénomènes de cavitation, de bruit et par conséquent, d'usure de l'obturateur et du logement de la vanne.

De plus, cet élément générateur d'une perte de charge modifie la courbe de charge sur l'obturateur de telle manière qu'elle soit sensiblement symétrique par rapport à son axe de rotation. Ainsi, les problèmes liés au pivotement de l'obturateur et à son maintien en position sont résolus.

En outre, la dimension des ouvertures de l'élément générateur une perte de charge permet une régulation particulièrement fine en début d'ouverture de la vanne.

La présente invention n'est pas limitée aux exemples de réalisation décrits ci-dessus, mais s'étend à toute modification évidente pour l'homme de l'art. La forme des ouvertures de l'élément générateur d'une perte de charge reliant le canal d'entrée au logement de la vanne peut être pratiquement quelconque pour autant que ces ouvertures assurent une perte de charge importante en début d'ouverture. L'élément générateur d'une perte de charge peut notamment être réalisé directement dans le corps de la vanne ou être rapporté.

L'axe de rotation de l'obturateur mobile peut en outre être centré par rapport au logement de la vanne ou être excentré horizontalement et/ou verticalement. Le décentrage de l'axe de rotation de l'obturateur mobile, permet de modifier la position de la charge statique sur l'obturateur. Ceci peut être avantageux lorsque l'on désire que la charge statique sur l'obturateur soit symétrique par rapport à son axe de rotation, ce qui facilite la régulation.

## Revendications

1. Vanne de régulation du type à papillon, comportant un corps dans lequel est ménagé un logement contenant un obturateur mobile appelé papillon, cet obturateur étant rotatif autour d'un axe, ledit logement étant prolongé d'une part par un canal d'entrée et d'autre part par un canal de sortie, ces canaux étant respectivement agencés pour être connectés à un conduit d'entrée et à un conduit de sortie, ledit canal d' entrée, ledit logement et ledit canal de sortie définissant un passage de communication reliant le conduit d'entrée au conduit de sortie, la section efficace de ce passage et par conséquent le débit du fluide traversant la vanne étant régulés en fonction de la position angulaire de l'obturateur dans le logement, caractérisée en ce qu'elle comporte au moins un élément générateur d'une perte de charge (18, 60, 70) localisé dans une zone périphérique du canal d'entrée (15), cet élément comportant au moins un passage calibré reliant le canal d'entrée (15) audit logement (12, 32) et en ce que ledit logement (32) comporte une zone de fermeture intermédiaire (33) diamétralement opposée à l'élément générateur d'une perte de charge (18, 60, 70) et agencée pour coopérer avec ledit obturateur mobile afin d'assurer la fermeture de cette partie de la vanne pour que le fluide traversant la vanne ne puisse pénétrer dans le logement (32) que par le seul élément générateur d'une perte de charge (18, 60, 70).

2. Vanne de régulation selon la revendication 1, caractérisée en ce que l'élément générateur d'une perte de charge (18) comporte plusieurs passages calibrés (19) reliant le canal d'entrée au logement (12) contenant l'obturateur mobile (13).

3. Vanne de régulation selon la revendication 1, caractérisée en ce que l'élément générateur d'une perte de charge (60) comporte plusieurs rainures longitudinales (61) reliant le canal d'entrée au logement contenant l'obturateur mobile.

4. Vanne de régulation selon la revendication 1, caractérisée en ce que l'élément générateur d'une perte de charge (70) comporte plusieurs fentes ondulées (71) reliant le canal d'entrée au logement contenant l'obturateur mobile.
